# EUROPÄISCHE PATENTSCHRIFT

(11) **EP 1 992 461 B1**
(45) Veröffentlichungstag und Bekanntmachung des Hinweises auf die Patenterteilung: **26.10.2011**
(21) Anmeldenummer: 08450078.4
(22) Anmeldetag: 13.05.2008
(51) Int. Cl.: B27B 5/22, B27G 19/02

(54) **Wippsägevorichtung**
Tilting saw device
Dispositif de scie à bascule

(30) Priorität: 15.05.2007 AT 7552007
(43) Veröffentlichungstag der Anmeldung: 19.11.2008
(73) Patentinhaber: Posch Gesellschaft m.b.H., 8430 Leibnitz/Kaindorf (AT)
(72) Erfinder: Reiter, Erwin, 8430 Tillmitsch (AT)
(74) Vertreter: Wildhack & Jellinek

(56) Entgegenhaltungen:
- DE-C- 523 297
- DE-U1-202006 010 774
- GB-A- 207 821

## Beschreibung

Die Erfindung betrifft eine Wippsägevorrichtung gemäß dem Oberbegriff des Anspruches 1. Eine solche Vorrichtung ist aus GB 207 821 A bekannt.

Das Hantieren mit Kreissägen zum Zwecke des Schneidens von Brennholz birgt einige Risiken für den Benutzer der Kreissäge, sodass Kreissägen schon Gegenstand von diversen Normungsverfahren waren, die die Reduktion des von diesen Maschinen ausgehenden Gefahrenpotentials zum Ziel hatten.

Aktuelle Anforderungen an eine Wippkreissäge sind laut E-Norm EN1870-6 definiert. Die bisherigen Anforderungen an die Brennholzwippe sind im Abschnitt 5.2.6.1 beschrieben. Diese harmonisierte Europanorm erfüllt bei Weitem nicht die Anforderungen der Maschinenrichtlinie und schließt die Möglichkeit von schweren Handverletzungen, insbesondere Amputationen einzelner Finger, der Hand oder Teilen des Armes, keinesfalls aus. Unfälle mit derartigen Maschinen sind sowohl mit Fehlern bei der Wartung dieser Maschinen als auch mit unsachgemäßer Verwendung in Zusammenhang zu bringen. Die Erfindung hat die Aufgabe, eine typische Form von unsachgemäßer Verwendung zu verhindern, die sich wie folgt darstellt:
Die Wippe wird nicht, wie vorgesehen, mit beiden Händen, sondern mit entweder nur einer Hand oder unter Zuhilfenahme anderer Körperteile bewegt, um das Schneidgut mit den freigewordenen Händen in eine andere Position zu bringen. Aus diesem Grund sind eine oder beide Hände einer erheblichen Gefahr durch das Sägeblatt als auch durch das Schneidgut im Schneideraum ausgesetzt, was zum Teil erhebliche Verletzungen mit sich bringen kann. Daher ist das Hauptziel der Erfindung, eine Schutzvorrichtung an einer Brennholzsäge anzubringen, welche die Möglichkeit von Fingeramputationen im Kreissägeblattbereich völlig verhindert.
Die Sicherheitsvorrichtungen, die dem Stand der Technik entsprechen, wurden aus der oben angeführten Norm entnommen und ergeben sich wie folgt: Der Schneidraum, der das Schneidgut enthält, weist zur Sicherung des Schneidgutes zwei Flächen für die Auflage auf, die einen Winkel von 70 bis 90° zueinander haben. Hierbei soll die Bewegung des Schneidgutes möglichst verhindert werden, insbesondere geht vom Drehen des Schneidguts besondere Gefahr aus. Des Weiteren ist vorgesehen, dass in der sägefernen Ausgangsstellung der Wippe ein Abstand zwischen dem Schneidgut und dem Sägeblatt von mindestens 50 mm vorhanden sein muss. Es sind Mindesiabstände vorgesehen, in denen sich die Handgriffe zum Sägeblatt befinden müssen. Weiters muss eine Anschlagbegrenzung vorgesehen sein, welche verhindert, dass das Sägeblatt mit den geforderten trennenden Schutzreinrichtungen in Berührung kommt. Es muss auch die Zuführwippe selbsttätig in die Ausgangsstellung zurückkehren.

Ferner sollen neben der erforderlichen Betriebssicherheit ausreichende Stabilität und einfacher Aufbau gewährleistet sein.

Die Erfindung löst die aufgegebenen Aufgaben, bei einer Wippsägevorrichtung der eingangs genannten Art mit dem Kennzeichen des Anspruches 1. Es wird eine Sicherheitsklappe an die Säge angebracht, die den Schneidraum abdeckt, wenn das Sägeblatt in den Schneidraum vordringt, sodass der Benützer von Verletzungen der oberen Extremitäten dadurch geschützt wird, dass ein manueller Zugriff auf den sicherheitsrelevanten Bereich der Kreissäge unmöglich gemacht wird, bzw. nur bei absichtlicher missbräuchlicher Verwendung möglich ist.

Befindet sich die Sägewippe in der Ausgangsstellung, so lässt die geöffnete Sicherheitsklappe ein problemloses Beschicken mit Schneidgut von oben oder seitlich zu. In diesem Zustand ist das Kreissägeblatt noch nicht in den Schneidraum vorgedrungen und es geht von dieser Wippsägevorrichtung keinerlei Gefahr für den Benutzer aus.

Bei einer Betätigung der Wippe dringt das Sägeblatt durch eine dafür vorgesehene Ausnehmung in den Schneidraum vor und schneidet das Schneidgut. Sobald dies geschieht, schwenkt die Sicherheitsklappe in eine Position, in der der Zugriff auf den Schneidraum verhindert wird. Solange sich jedoch die Hände innerhalb des Schneidraumes befinden, verhindert die Sicherheitsklappe ein weiteres Verschwenken der Wippe in den Schneidbereich, sodass während des Schneidevorganges die Hände nicht im Schneidebereich verbleiben können.

Am Gestell der Kreissäge ist ein Bügel montiert, der unter der Abdeckhaube für das Sägeblatt an seinem einen Ende fix und unbeweglich mit dem Gestell verbunden ist. An seinem anderen Ende ist eine Umlenkvorrichtung, in diesem Falle eine Rolle, angebracht. Diese Rolle befindet sich oberhalb der Achse, an der die Sicherheitsklappe an dem sägeseitigen Teil der Sägewippe angebracht ist. Wird die Sägewippe in Schneidposition gebracht, so wird die Sicherheitsklappe durch die am Bügel befindliche Rolle mit Druck beaufschlagt und nach unten in eine Position gebracht, sodass der Schneidraum verdeckt wird.

Für die Anordnung der Sicherheitsklappe gibt es mehrere Möglichkeiten, eine bevorzugte Ausführungsform der Sicherheitsklappe kann mit dem Kennzeichen des Anspruchs 2 erreicht werden. Wenn sich die Sägewippe in der Schneidstellung befindet, so ist der gesamte Schneidraum von oben zur Bedienerseite hin abgedeckt. Wird die Sägewippe losgelassen, bewegt diese sich ohne manuelle Bedienung in die Ausgangsstellung zurück, und das Entnehmen des Schneidguts sowie erneutes Beschicken ist gefahrlos möglich.

Es wird eine bevorzugte Konstruktionsform der Sicherheitsklappe beschrieben: Die Wippe besteht aus einem Unterteil, welcher an einem oder mehreren Punkten der Drehachse mit dem Gestell verschwenkbar verbunden ist, einem benutzerseitigen Teil, der fest mit dem Fußteil verbunden ist und einen Griff sowie eine Auflagefläche für das Schneidgut aufweist sowie einem sägeseitigen Teil, der ebenfalls fest mit dem Fußteil verbunden ist und auch eine Auflagefläche zum Festhalten des Schneidgutes beinhaltet, sowie eine Ausnehmung, die dazu dient, dass das Sägeblatt in den Schneidraum vordringen kann, der sich zwischen dem benutzerseitigen und dem sägeseitigen Teil der Schneidwippe befindet. Das Sägeblatt könnte auch in Richtung der Schwenkachse der Wippe so verlagert werden, dass das Sägeblatt seitlich neben der Wippe in das Schneidgut eindringt. Am obersten Ende des sägeseitigen Teils der Wippe ist die Sicherheitsklappe gelagert. Die Sicherheitsklappe ist um dieselbe Achse wie die Wippe verschwenkbar.

Um einen möglichst großen Schutz des Benutzers der Säge zu gewährleisten, ist es von Bedeutung, möglichst große Teile des Schneidraums frei von manuellen Zugriffen zu halten. Als besonders gefährlich erweist sich in diesem Fall der manuelle Zugriff von oben. Aus diesem Grund ist es das vorrangige Ziel der Erfindung, diesen Bereich frei von Zugriffen des Benutzers von oben zu halten. Des Weiteren ist es aber durchaus möglich, während des Schneidevorganges das Schneidgut seitlich, in Achsrichtung der Wippe zu verschieben. Dabei kann es passieren, dass Teile der Hand bzw. des Armes in den Schneidraum vordringen. Um dies zu verhindern, kann die Sicherheitsklappe auch weitere Teile umfassen, die die Ausnehmung für das Schneidgut seitlich abdecken, soferne das Schneidgut klein genug ist und vollständig in den Schneidraum passt.

Weiters besteht auch gemäß Anspruch 4 die Möglichkeit, die Sicherheitsklappe um eine zur Wippachse parallelen Achse zu lagern, die ansonsten fest mit dem oberen Teil des Gestells verbunden ist. In diesem Falle ist weiters ein Gestänge vorzusehen, welches sowohl an der Sicherheitsklappe als auch am sägeseitigen Teil der Wippe befestigt ist. Beim Verschwenken der Wippe bewirkt die entstehende Bewegung des sägeseitigen Teils umgelenkt durch das Gestänge das Verschließen der Sicherheitsklappe.

Anspruch 5 beschreibt eine bevorzugte Ausführungsform des Umlenkelements, welches zur Druckbeaufschlagung der Sicherheitsklappe verwendet wird. Da die Sicherheitsklappe entlang dieses Umlenkelementes beim Verschwenken der Wippe in die Schneidposition unter das Umlenkelement geschoben wird, ist eine gerundete, drehbare Ausführungsform des Umlenkelementes von Vorteil, da die Reibung, die auf die Sicherheitsklappe einwirkt, minimiert wird.

Anspruch 6 betrifft eine Ausführungsform, in der die Sicherheitsklappe den Schneidraum vollständig verschließt, wenn die Wippe sich in Schneideposition befindet. Dies betrifft den Zugriff auf den Schneidraum sowohl von rechts, links als auch von oben.

In Anspruch 7 ist eine Feder vorgesehen, die zwei Aufgaben zu erfüllen hat. Zum einen hat sich die Aufgabe, gemäß E-Norm 1870-6 5.2.6.1.g die Zuführwippe selbstständig in die Ausgangsstellung zurückzuführen. Des Weitern besteht die Notwendigkeit, dass sich nach vollendetem Schneidevorgang die Sicherheitsklappe wieder öffnet, damit Schneidgut zugeführt werden kann. Befindet sich die Sicherheitsklappe gelagert am sägeseitigen Teil der Wippe, so kann die Sicherheitsklappe sich über die Lagerung hinaus in Richtung Säge erstrecken, wobei auf dieser Seite der Sicherheitsklappe eine Ausnehmung vorgesehen ist, die zum Einhängen einer Feder vorgesehen ist. An einem, dem oberen Ende des sägeseitigen Teils der Wippe ferneren, Punkt ist ebenfalls eine Ausnehmung vorgesehen, in die das andere Ende der Feder eingesetzt ist. Dadurch ist es möglich, dass die Feder sowohl die Funktion des Öffnens der Sicherheitsklappe als auch das Zurückschwenken der Wippe in die Ausgangsposition verrichtet.

Anspruch 8 betrifft eine, am benutzerseitigen Teil der Wippe angebrachte Vorrichtung, die mit der Sicherheitsklappe in verschlossener Position bündig zum Abschluss gebracht wird. Dies ist notwendig, um sowohl die Auflagefläche zu minimieren, als auch etwaige Spalte auszuschließen, die entweder das Eindringen des Benutzers ermöglichen oder Staub und Splitter entweichen ließen. Für diesen Zweck können auch spezielle Materialien vorgesehen werden, die den Schneidraum insbesondere staubdicht und hitzefest abschließen.

Anspruch 9 behandelt die Möglichkeit, dass die Sicherheitsklappe durchsichtig ausgebildet sein kann. Dies ist insbesondere dann von Bedeutung, wenn der Zugriff auf den Schneidraum zwar verhindert werden soll, es jedoch notwendig ist, den Schneidvorgang zu beobachten. So kann beispielsweise festgestellt werden, dass sich beim Schneidevorgang Rauch entwickelt, dass große Absplitterungen von Schneidgut erfolgen oder dass das Sägeblatt beschädigt ist.

Anspruch 10 sieht vor, dass die Drehachse der Wippe normal auf die Schneideebene des Sägeblattes steht. Dies ist besonders wichtig, da das Schiefstehen des Sägeblattes gegenüber der Verschwenkungsrichtung der Sägewippe zu vorzeitigen Materialproblemen des Sägeblattes führt.

Des Weiteren sieht die Erfindung gemäß Anspruch 11 vor, dass es sich bei der verwendeten Antriebseinheit der Sägevorrichtung sowohl um Elektromotoren als auch Verbrennungsmotoren handeln kann, die entweder direkt oder mittels eines Getriebes auf das Sägeblatt einwirken.

Bei dem Sägeblatt kann es sich sowohl um ein Kreissägeblatt als auch um ein Stichsägeblatt handeln. Im Falle einer Stichsäge sind mehrere Anordnungen des Stichsägeblattes möglich, da es mehrere mögliche Lagen gibt, das Sägeblatt in derselben Ebene anzuordnen. Daher ist es möglich, Stichsägeblätter in einer beliebigen Position innerhalb einer Ebene, die sich normal zur Wippachse befindet, zu befestigen. Um den Winkel der Verschwenkung jedoch möglichst kurz zu halten, ist eine Position des Sägeblattes von Vorteil, die etwa senkrecht ist.

Gemäß Anspruch 12 ist vorgesehen, dass die Ausnehmung für das Schneidgut eine schlitzförmige Öffnung aufweist, damit das Sägeblatt in den Schneidraum vordringen kann.

Des Weiteren wäre es gemäß Anspruch 13 ebenfalls möglich, dass sich das Sägeblatt nicht durch eine Ausnehmung des sägeseitigen Teils der Wippe in den Schneidraum bewegt, sondern an der Wippe vorbei in den Schneidraum eindringt, wobei das Sägeblatt in Richtung der Achse der Wippe verschoben ist. Für diesen Fall müsste eine angepasste Abdeckhaube vorgesehen werden, die in diesem Fall das Sägeblatt seitlich verdeckt.

Gemäß Anspruch 14 erweist es sich als zielführend, dass die Sicherheitswippe aus schlag- und hitzefestem Material besteht, da durch den Sägevorgang Absplitterungen sowie Feststoffe und Gase von hoher Temperatur auftreten können, die zu Beschädigungen der Sicherheitsklappe führen.
Fig. 1 zeigt die Sägewippe in Ausgangsstellung. In dieser Position wird die Wippe mit Holz beschickt bzw. geschnittenes Holz entnommen. Die Klappe 2 ist geöffnet und in einer Position, in der das Beschicken bzw. Entnehmen möglich ist.
Fig. 2 zeigt die Sägewippe in Schneidposition.
Fig. 3 zeigt die Sägewippe in einer Position, in der die Sicherheitsklappe teilweise verschlossen ist, das Sägeblatt jedoch noch nicht zum Schneidgut in den Schneidraum vorgedrungen ist.
Fig. 4 zeigt die Sägewippe in Ausgangsstellung von seitlich oben.

Die Wippsägevorrichtung umfasst ein Gestell 25, welches Stützen oder Räder umfasst, die am Boden aufliegen und die Stabilität des Gestells gewährleisten, insbesondere das Kippen und Umkippen verhindern. Mit dem Gestell 25 fest verbunden sind ein Motor 7 sowie eine Vorrichtung zum Aufhängen des Sägeblattes 8. Das Sägeblatt 8 wird durch den Sägeblattantrieb 7, insbesondere einem E-Motor mit Direktantrieb, E-Motor mit Keilriemenantrieb oder Verbrennungsmotor mit Keilriemen oder Zapfwellengetriebe mit Keilriemen, angetrieben. Des weiteren kann der Sägeblattantrieb durch ein Getriebe 16 erfolgen, das sich zwischen dem Sägeblatt 8 und Motor 7 befindet. Am Gestell 25 befinden sich des Weiteren Anschlüsse für die Stromversorgung, elektrische Einheiten, Steuerungen für den Motor bzw. Notausschalter. Weiters fix mit dem Gestell 25 verbunden ist eine Abdeckhaube 20, die das Sägeblatt 8 nach oben hin, zur benutzerfernen Seite abdeckt.

Am Gestell 25 ist eine Wippe 9 verschwenkbar angebracht, die zum Führen des Schneidgutes dient. Diese Wippe umfasst einen Fußteil 12, welcher mit einem benutzerseitigen Teil 10 verbunden ist, der eine Auflagefläche für das Schneidgut aufweist sowie an seinem dem Fußteil 12 fernen Ende einen Griff 10 aufweist. Am oberen Ende des Fußteils 12 greift ein weiterer, sägeseitiger Teil 11 der Wippe 9 an. Dieser ist fest mit dem Fußteil 12 verbunden. Der Raum zwischen benutzerseitigem Teil 10 und sägeseitigem Teil 11 der Wippe wird als Schneidraum 1 bzw. Ausnehmung für Schneidgut bezeichnet. An dem, dem Fußteil 12 der Sägewippe 9 fernen Ende des sägeseitigen Teils 11 der Wippe 9 befindet sich eine Lagerung 4 für die Sicherheitsklappe 2.

Die Achse der Lagerung 4 der Sicherheitsklappe 2 am Ende des sägeseitigen Teils 11 der Wippe 9 sowie die Wippachse sind parallel. Ein Teil 5 der Sicherheitsklappe 2 ragt über die Aufhängung 4 der Sicherheitsklappe am sägeseitigen Teil 11 der Wippe 9 hinaus und umfasst zumindest eine Ausnehmung zum Einhängen einer Feder 6. Des Weiteren weist der sägeseitige Teil 11 der Wippe 9 ebenfalls eine weitere Ausnehmung 13 etwa in der Mitte auf, an dem die Feder 6 mit ihrem anderen Ende angebracht ist. Fest mit dem Gestell 25 der Sägevorrichtung befestigt ist ein Bügel 35, welcher an dem dem Gestell 25 fernen Ende eine Umlenkvorrichtung 3 enthält. Diese Umlenkvorrichtung 3 hat die Aufgabe, die Sicherheitsklappe 2 beim Verschließen mit Kraft zu beaufschlagen, sodass diese entgegen der Wirkung der Feder 6 den Schneidraum 1 verschließt und den Zugriff des Benutzers verhindert. Das Umlenkelement 3 ist als Rolle ausgebildet, um eine bessere, reibungsmindernde Führung der Sicherheitsklappe 2 zu gewährleisten.

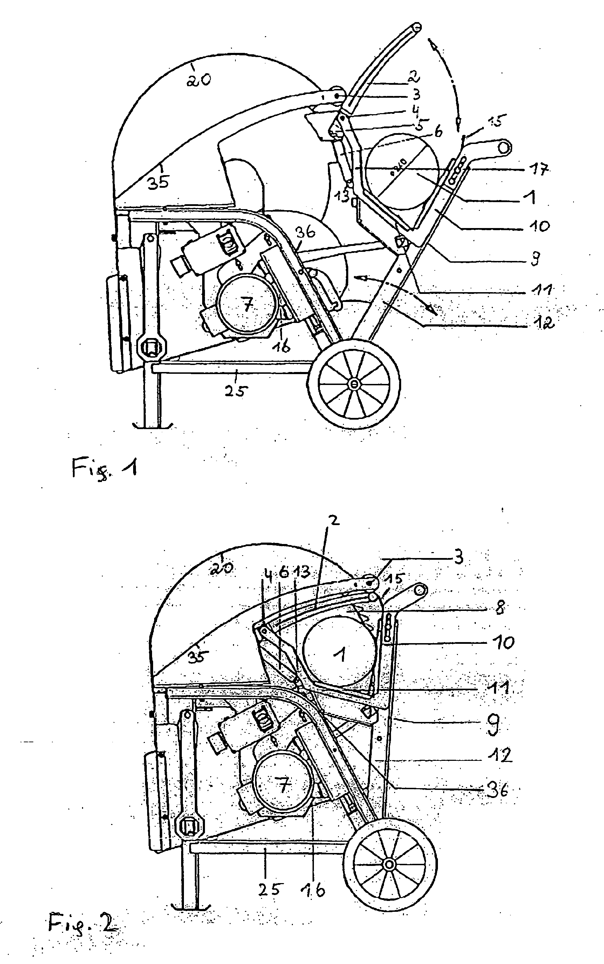

Fig. 1 zeigt die Sägewippe in der Ausgangsstellung; hierbei ist die Feder 6 in ihrer Ausgangsposition und zieht den sägeseitigen Teil der Sicherheitsklappe 5 nach unten, wodurch die Sicherheitsklappe 2 sich nach oben bewegt und den Zugang zum Schneidraum 1 freigibt. Die Sägewippe 9 selbst befindet sich in einer Position, die dem Sägeblatt 8 am weitesten entfernt ist.

In der Endposition, welche in Fig. 2 dargestellt ist, ist das Sägeblatt 8 vollständig in das Schneidgut eingedrungen, die Sägewippe 9 wird in ihrer Bewegung durch einen als Anschlag fungierenden Gestellteil 36 gestoppt, wobei die Feder 6 gespannt ist. Ein weiteres Verschwenken der Sägewippe 9 in Richtung des Sägeblattes 8 ist nicht mehr möglich.

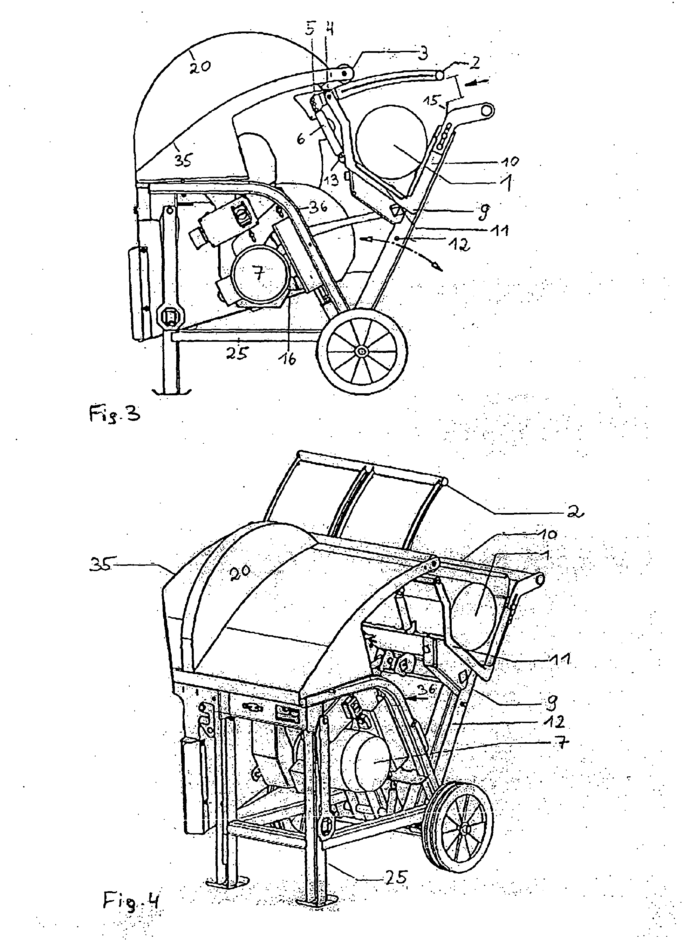

Fig. 3 zeigt die Wippsägevorrichtung in einer Position, in der die Sicherheitsklappe 2 teilweise geschlossen ist. Das Sägeblatt 8 ist noch nicht in den Schneidraum 1 vorgedrungen, ein Hantieren mit dem Schneidgut ist teilweise, wenn auch eingeschränkt, noch möglich. Solange sich die Hände oder andere Gegenstände noch zwischen dem benutzerseitigen Teil 10 der Sägewippe 9 und der Sicherheitsklappe 2 befinden, ist ein weiteres Verschwenken der Sägewippe 9 nicht möglich. Die Feder 6 ist gespannt, das Loslassen der Wippsägevorrichtung bringt die Wippsäge wieder in die Ausgangsposition zurück. Die Sicherheitsklappe 2 wird durch das Umlenkelement 3 mit Druck beaufschlagt und nach unten gedrückt. Durch die rollenförmige Ausbildung des Umlenkelementes 3 gleitet die Sicherheitsklappe 2 unter dem Bügel 35 hindurch.

## Patentansprüche

1. Wippsägevorrichtung mit zumindest einem Sägeblatt (8) und einer relativ zum Sägeblatt (8) relativ zu einem Grundgerüst (25) verschwenkbar gelagerten Wippe (9), umfassend einen Fußteil (12), einen benutzerseitigen Teil (10) und einen sägeseitigen Teil (11) und einer dazwischen befindlichen Ausnehmung (1) für Schneidgut,
- wobei die Wippe (9) zwischen einer dem Sägeblatt (8) fernen Ruheposition und einer dem Sägeblatt (8) nahen Schneidposition verschwenkbar ist,
- wobei an der Wippsägevorrichtung eine bewegliche Sicherheitsklappe (2) vorgesehen ist.
- wobei die Sicherheitsklappe (2) derart angeordnet, gelagert bzw. angelenkt ist, dass beim Verschwenken der Wippe (9) in die Schneidposition die gesamte Ausnehmung (1) für Schneidgut von der Sicherheitsklappe (2) von oben verdeckt wird, zur Verhinderung eines Zugriffs auf die Ausnehmung (1) für Schneidgut (1) während des Schneidevorgangs,
- wobei ein Grundgerüst (25) vorgesehen ist, auf dem das Sägeblatt (8) angeordnet ist und an dem die Wippe (9) verschwenkbar gelagert ist, und wobei das Grundgerüst (25) eine Haube (20) aufweist, **dadurch gekennzeichnet, dass** die Haube beim Verschwenken der Wippe (9) in der Schneidposition die Sicherheitsklappe (2) druckbeaufschlagt und verschließt.

2. Vorrichtung gemäß Anspruch 1, **dadurch gekennzeichnet, dass** die Sicherheitsklappe (2) die Ausnehmung (1) von zumindest einer Seite, insbesondere von oben, verschließt, wobei für das Verschließen an der Sicherheitsklappe (2) jeweils Seitenwände vorgesehen sind, die den Schneidraum (1) zumindest teilweise abdecken.

3. Vorrichtung gemäß Anspruch 1 bis 2, **dadurch gekennzeichnet, dass** die Sicherheitsklappe (2) am sägeseitigen Teil (11) der Wippe (9), insbesondere an dessen Endbereich, um eine Achse (4) schwenkbar gelagert ist.

4. Vorrichtung gemäß Anspruch 1 bis 2, **dadurch gekennzeichnet, dass** ein Bügel (35) vorgesehen ist, der an der Oberseite des Grundgerüstes (25) befestigt ist, insbesondere in die Haube (20) integriert ist, und an dem die Sicherheitsklappe (2) gelagert ist.

5. Vorrichtung gemäß einem der Ansprüche 1 bis 4, **dadurch gekennzeichnet, dass** der Bügel (35) in seinem dem Grundgerüst (25) fernen Endbereich zumindest ein, vorzugsweise gerundetes und/oder drehbares, Umlenkelement (3) aufweist.

6. Vorrichtung gemäß Anspruch 1 bis 5, **dadurch gekennzeichnet, dass** die Sicherheitsklappe (2) in der Schneidposition der Wippe (9) unter die Haube (20) geschoben und von der Haube (20) abgedeckt ist.

7. Vorrichtung gemäß Anspruch 1 bis 6, **dadurch gekennzeichnet, dass** zum Rückstellen der Sicherheitsklappe (2) in eine geöffnete Position eine Feder (6) vorgesehen ist.

8. Vorrichtung gemäß Anspruch 1 bis 7, **dadurch gekennzeichnet, dass** die Sicherheitsklappe (2) mit dem benutzerseitigen Teil der Wippe (9), insbesondere mit einer am benutzerseitigen Teil der Wippe (10) angebrachten Sicherheitsblende (15), bündig bzw. berührend abschließt bzw. auf dieser aufliegt.

9. Vorrichtung gemäß Anspruch 1 bis 8, **dadurch gekennzeichnet, dass** die Sicherheitsklappe (2) durchsichtig ist.

10. Vorrichtung gemäß Anspruch 1 bis 9, **dadurch gekennzeichnet, dass** die Schwenkachse der Wippe (9) normal auf die Schneidebene des Sägeblattes (8) steht.

11. Vorrichtung gemäß Anspruch 1 bis 10, **dadurch gekennzeichnet, dass** der Antrieb (7) für das Sägeblatt (8) entweder von einem Elektromotor mit Direktantrieb oder von einem Elektromotor mit Keilriemenantrieb oder einem Verbrennungsmotor mit Keilriemen oder einem Zapfenwellengetriebe mit Keilriemen gebildet ist, wobei gegebenenfalls zwischen dem Sägeblattantrieb (7) und dem Sägeblatt (8) ein Getriebe (16) vorgesehen ist und/oder dass es sich bei dem Sägeblatt (8) um mindestens ein Kreissägeblatt und/oder Stichsägeblatt handelt.

12. Vorrichtung gemäß Anspruch 1 bis 11, **dadurch gekennzeichnet, dass** am sägeseitigen Teil der Wippe (11) in der Schneideebene des Sägeblatts (8) eine Ausnehmung (17) für das Sägeblatt (8) vorgesehen ist, durch die das Sägeblatt (8) in die Ausnehmung für das Schneidgut (20) einbringbar ist.

13. Vorrichtung gemäß Anspruch 1 bis 11, **dadurch gekennzeichnet, dass** das Sägeblatt (8) seitlich in Richtung der Achse der Wippe (9) versetzt ist und das Sägeblatt (8) an der Wippvorrichtung (9) vorbei in das Schneidgut einbringbar ist.

14. Vorrichtung gemäß Anspruch 1 bis 13, **dadurch gekennzeichnet, dass** die Sicherheitsklappe (2) aus stoß- und schlagfestem Material bzw. aus hitzebeständigem Material besteht.

15. Vorrichtung gemäß Anspruch 1 bis 14, **dadurch gekennzeichnet, dass** das Sägeblatt (8) lagefest auf dem Grundgerüst (25) angeordnet ist.

## Claims

1. A cordwood saw device having at least one saw blade (8) and a cradle (9) which is arranged to be pivotable in relation to said saw blade (8) and in relation to a basic structure (25), said cradle (9) comprising a foot part (12), a part (10) disposed at the user's side and a part (11) disposed at the saw's side as well as a recess (1) therebetween for accommodating the material to be cut,
- said cradle (9) being pivotable between a resting position remote from the saw blade (8) and a cutting position close to the saw blade (8),
- said cordwood saw device being provided with a movable safety cover (2),
- said safety cover (2) being arranged, supported or articulated in a way that the overall recess (1) for accommodating the material to be cut is covered from above, when the cradle (9) is pivoted into its cutting position, in order to prevent any access to the material to be cut in the recess (1) during the cutting process,
a basic structure (25) on which the saw blade (8) is arranged and in relation to which the cradle (9) is pivotably arranged being provided, and said basic structure (25) having a hood (20), **characterised in that** said hood exerts pressure on the safety cover (2) and closes it, when the cradle (9) is pivoted into its cutting position.

2. The device according to claim 1, **characterised in that** said safety cover (2) closes the recess (1) at least at one side, especially from above, lateral walls, which at least partially cover the cutting space (1), being provided on the safety cover (2) for closing the recess.

3. The device according to claim 1 and claim 2, **characterised in that** said safety cover (2) is supported on the part (11) disposed at the saw's side of the cradle (9), especially in the terminal area of said part (11), so that it is pivotable around an axis (4).

4. The device according to claim 1 and claim 2, **characterised in that** a bracket (35) is provided which is mounted to the upper surface of the basic structure (25), in particular being integrated into the hood (20), and by which the safety cover (2) is supported is provided.

5. The device according to any one of the claims 1 to 4, **characterised in that** said bracket (35) has at least one deflection element (3) in its terminal area which is remote from the basic structure (25), said deflection element (3) being preferably rounded and/or rotatable.

6. The device according to any one of the claims 1 to 5, **characterised in that**, in the cutting position of the cradle (9), the safety cover (2) slides under the hood (20) and is covered by the hood (20).

7. The device according to any one of the claims 1 to 6, **characterised in that** a spring (6) is provided for returning the safety cover (2) into an open position.

8. The device according to any one of the claims 1 to 7, **characterised in that** the safety cover (2) is flush mounted to or in contact with or is supported by the part of the cradle (9) which is disposed at the user's side, in particular to/with/by a safety screen (15) mounted to the part (10) of the cradle which is disposed at the user's side.

9. The device according to any one of the claims 1 to 8, **characterised in that** the safety cover (2) is transparent.

10. The device according to any one of the claims 1 to 9, **characterised in that** the pivot axis of the cradle (9) is disposed perpendicular to the cutting plane of the saw blade (8).

11. The device according to any one of the claims 1 to 10, **characterised in that** the drive (7) of the saw blade (8) is formed by an electric motor with a direct drive or by an electric motor with a V-belt drive or by a combustion engine with a V-belt or a power-take-off with a V-belt, a gear (16) being optionally provided between the drive (7) of the saw blade and the saw blade (8), and/or **in that** the saw blade (8) is at least one disk of a circular saw and/or a blade of a jigsaw.

12. The device according to any one of the claims 1 to 11, **characterised in that** a recess (17) for the saw blade (8) is provided in the cutting plane of the saw blade (8) in the part (11) of the cradle which is disposed at the saw's side, the saw blade (8) being insertable into the recess (20) for the material to be cut through said recess (17).

13. The device according to any one of the claims 1 to 11, **characterised in that** the saw blade (8) is laterally offset in the axial direction of the cradle (9) and that the saw blade (8) may be moved past the cradle (9) in order to cut into the material to be cut.

14. The device according to any one of the claims 1 to 13, **characterised in that** the safety cover (2) consists of a shock- and heat-resistant material.

15. The device according to any one of the claims 1 to 14, **characterised in that** the saw blade (8) is disposed in a stable position on the basic structure (25).

## Revendications

1. Appareil de scie alternative à découper avec au moins une lame de scie (8) et un élément de bascule (9) qui est logé de manière pivotante par rapport à ladite lame de scie (8) et par rapport à une structure de base (25), ledit élément de bascule (9) comprenant une part de pied (12), une part (10) au côté de l'usager et une part (11) au côté de la scie ainsi qu'un creux (1) pour le matériau à découper entre les deux,
- ledit élément de bascule (9) étant pivotant entre une position de reste, écartée de la lame de scie (8), et une position de coupe à proximité de la lame de scie (8),
- l'appareil de scie alternative à découper étant prévu avec un clapet de sécurité (2),
- ledit clapet de sécurité (2) étant disposé, logé ou articulé de manière que le creux (1) entier pour le matériau à découper est couvert d'en haut quand l'élément de bascule (9) est pivoté vers la position de coupe, pour empêcher tout accès au creux (1) pour le matériau à découper durant la découpe,
- une structure de base (25), sur laquelle la lame de scie (8) est disposée et sur laquelle l'élément de bascule (9) est logé de manière pivotante, étant prévue et ladite structure de base (25) ayant un capot (20), **caractérisé en ce que** ledit capot (20) pressurise et ferme le clapet de sécurité (2) quand l'élément de bascule (9) est pivoté vers la position de coupe.

2. Appareil selon la revendication 1, **caractérisé en ce que** le clapet de sécurité (2) renferme le creux (1) d'au moins un côté, notamment d'en haut, des parois latérales qui couvrent l'espace de coupe (1) au moins partiellement étant prévues sur le clapet de sécurité (2) pour renfermer le creux (1).

3. Appareil selon les revendications 1 et 2, **caractérisé en ce que** le clapet de sécurité (2) est logé de manière pivotante autour d'un axe (4) sur la part (11) au côté de la scie de l'élément de bascule (9), notamment sur sa extrémité.

4. Appareil selon les revendications 1 et 2, **caractérisé en ce qu'**un élément de console (35) est prévu, ledit élément de console (35) étant fixé sur la surface supérieure de la structure de base (25), notamment de manière intégrée avec le capot (20), et sur laquelle le clapet de sécurité (2) est logée.

5. Appareil selon l'une des revendications 1 à 4, **caractérisé en ce que** l'élément de console (35) a au moins un élément de déflexion (3), qui, de préférence, est arrondi et/ou tournant, à l'extrémité écartée de la structure de base (25).

6. Appareil selon l'une des revendications 1 à 5, **caractérisé en ce que** le clapet de sécurité (2) est poussé sous le capot (20) et couvert par le capot (20) dans la position de coupe.

7. Appareil selon l'une des revendications 1 à 6, **caractérisé en ce qu'**un ressort (6) est prévu pour remettre le clapet de sécurité (2) dans une position ouverte.

8. Appareil selon l'une des revendications 1 à 7, **caractérisé en ce que** le clapet de sécurité (2) est affleuré par rapport à ou contacte ou s'appuie sur la part (10) de l'élément de bascule (9) qui se trouve au côté de l'usager, notamment un écran de sécurité (15) fixé à la part (10) de l'élément de bascule (9) qui se trouve au côté de l'usager.

9. Appareil selon l'une des revendications 1 à 8, **caractérisé en ce que** le clapet de sécurité (2) est transparent.

10. Appareil selon l'une des revendications 1 à 9, **caractérisé en ce que** l'axe de pivotement de l'élément de bascule (9) est perpendiculaire au plan de coupe de la lame de scie (8).

11. Appareil selon l'une des revendications 1 à 10, **caractérisé en ce que** le moteur (7) de la lame de scie (8) est un moteur électrique avec entraînement direct ou un moteur électrique avec commande à courroie trapézoïdale ou un moteur à combustion à courroie trapézoïdale ou une transmission de prise de force à courroie trapézoïdale, une transmission (16) étant éventuellement prévue entre le moteur (7) de la lame de scie et la lame de scie (8), et/ou **en ce que** la lame de scie (8) est au moins une lame de scie circulaire et/ou une lame de scie à guichet.

12. Appareil selon l'une des revendications 1 à 11, **caractérisé en ce que** un creux (17) pour la lame de scie (8), à travers duquel la lame de scie (8) peut être insérée dans le creux (17) pour le matériau à découper, est prévu dans la part (11) de l'élément de bascule qui se trouve au côté de la scie.

13. Appareil selon l'une des revendications 1 à 11, **caractérisé en ce que** la lame de scie (8) est déplacée dans la direction de l'axe de l'élément de bascule (9) et la lame de scie (8) peut passer l'élément de bascule (9) pour couper le matériau à découper.

14. Appareil selon l'une des revendications 1 à 13, **caractérisé en ce que** le clapet de sécurité (2) consiste en un matériau antichoc et réfractaire.

15. Appareil selon l'une des revendications 1 à 14, **caractérisé en ce que** la lame de scie (8) est disposée sur la structure de base (25) dans une position stable.
